# FASCICULE DE BREVET EUROPEEN

(11) **EP 0 433 110 B1**
(45) Date de publication et mention de la délivrance du brevet: **20.10.1993**
(21) Numéro de dépôt: 90403217.4
(22) Date de dépôt: 14.11.1990
(51) Int. Cl.: G01V 3/28, G01V 11/00

(54) **Elément de cuvelage constituant une source électromagnétique de puits**
Rohrelement als elektromagnetische Quelle in einem Bohrloch
Tubing element forming an electromagnetic borehole source

(30) Priorité: 15.11.1989 FR 8914960
(43) Date de publication de la demande: 19.06.1991
(73) Titulaire: ELF AQUITAINE PRODUCTION, 92400 Courbevoie (FR)
(72) Inventeur: Hubans, Christian, F-64000 Pau (FR)
(74) Mandataire: Boillot, Marc

(56) Documents cités:
- GB-A- 2 185 547
- NL-A- 58 058

## Description

L'invention est relative à un élément de cuvelage constituant une source électromagnétique de puits pour l'étude des propriétés électromagnétiques des formations géologiques ou des fluides au voisinage d'un puits cuvelé.

Les variations d'un champ électromagnétique sont caractéristiques des formations géologiques traversées par ce champ ainsi que des fluides qu'elles contiennent. En prospection pétrolière ou minière, il est usuel, pour étudier les propriétés électromagnétiques des formations géologiques traversées par un puits de forage, d'émettre un champ électromagnetique à partir d'une source électromagnétique descendue dans le puits et située en un point déterminé, et de mesurer ce champ en d'autres points déterminés du puits de sorte que les intervalles entre la source et les récepteurs placés aux points de mesures soient variables. Des techniques voisines consistent à mesurer le champ en des points situés à la surface du sol ou encore le long d'un second puits. Les sources sont usuellement constituées de bobines dans lesquelles circule un courant fourni par une alimentation électrique et sont descendues dans le puits à l'aide d'un câble. Les mesures s'effectuent la plupart du temps après cuvelage du ou des puits.

De telles sources présentent des inconvénients. En particulier le cuvelage agit comme un blindage, ce qui a pour effet de limiter le rayon d'investigation du dispositif de mesure et oblige, pour compenser, à augmenter la puissance du courant circulant dans la bobine émettrice. Un autre inconvénient réside dans le fait que l'utilisation de telles sources nécessite l'immobilisation temporaire du puits et ne permet qu'une investigation ponctuelle des formations.

L'invention propose un élément de cuvelage constituant une source électromagnétique de puits permettant de remédier aux insuffisances des systèmes décrits ci-dessus.

L'élément de cuvelage selon l'invention constituant une source électromagnétique de puits pour l'étude, en prospection ou exploitation pétrolière ou minière, des propriétés électromagnétiques des formations géologiques ou des fluides au voisinage d'un puits cuvelé est caractérisé en ce que cet élément comporte une bobine conductrice solénoïdale intégrée s'inscrivant dans un cylindre dont le diamètre est inférieur au diamètre extérieur du cuvelage et supérieur au diamètre intérieur du cuvelage, reliée à des moyens d'activation permettant le passage d'un courant électrique dans la bobine, ladite bobine étant noyée dans une gangue isolante.

La bobine est reliée, par ses extrémités supérieure et inférieure, aux moyens d'activation permettant le passage d'un courant électrique dans la bobine.

Les extrémités de la bobine peuvent, par exemple, être en contact électrique avec, l'une, l'élément de cuvelage directement supérieur à l'élément de cuvelage auquel la bobine est intégrée, l'autre, l'élément de cuvelage directement inférieur, ces deux éléments de cuvelage étant conducteurs, du moins en partie.

Dans ce cas, les moyens d'activation peuvent être constitués d'un patin pouvant être descendu dans le puits et permettant de relier les éléments conducteurs supérieur et inférieur du cuvelage à une alimentation de courant.

Avantageusement, l'élément de cuvelage intégrant la bobine est constitué en partie d'un élément tubulaire métallique interne à la bobine, qui fait office de noyau pour la bobine.

Selon une forme de réalisation préférentielle, le patin comporte au moins deux ergots conducteurs espacés d'une distance égale à la distance existant entre les éléments conducteurs inférieur et supérieur du cuvelage et sont reliés chacun à un des pôles d'une alimentation électrique.

Avantageusement, le patin comporte des moyens de blocage permettant de mettre en contact les ergots avec les éléments conducteurs supérieur et inférieur.

Dans une autre forme de réalisation, les moyens d'activation sont constitués par une paire de fils conducteurs reliant chacune des extrémités de la bobine, l'une au pôle positif d'une alimentation électrique, l'autre au pôle négatif de cette même alimentation.

Comme indiqué précédemment, la source électromagnétique selon l'invention est intégrée au cuvelage. Un telle source à demeure permet d'effectuer des mesures répétitives dans le temps sans qu'il soit nécessaire de décompléter le puits. Plusieurs sources du type selon l'invention peuvent être intégrées à un même cuvelage à des positions déterminées. Le cuvelage comportant une telle source électromagnétique multiple est alors constitué de la succession d'éléments ordinaires de cuvelage et d'éléments de cuvelage selon l'invention. Cette possibilité élargit le nombre des procédés de mesure possibles : on peut, par exemple, disposer ainsi d'une source multiple sans avoir à multiplier le nombre de câbles dans le tubing.

D'autres caractéristiques et avantages de l'élément de cuvelage selon l'invention constituant une source électromagnétique de puits pour l'étude des formations géologiques entourant un puits cuvelé apparaîtront à la lecture de la description suivante d'une forme de réalisation particulière dudit élément donnée à titre illustratif et non limitatif, en référence aux dessins annexés sur lesquels :
- la figure 1 représente schématiquement en coupe dans un plan axial longitudinal une source selon l'invention en place dans un puits tubé, et son patin d'activation,
- la figure 2 représente schématiquement en coupe dans un plan axial longitudinal une source électromagnétique multiple selon l'invention, avec un mode d'activation par câbles.

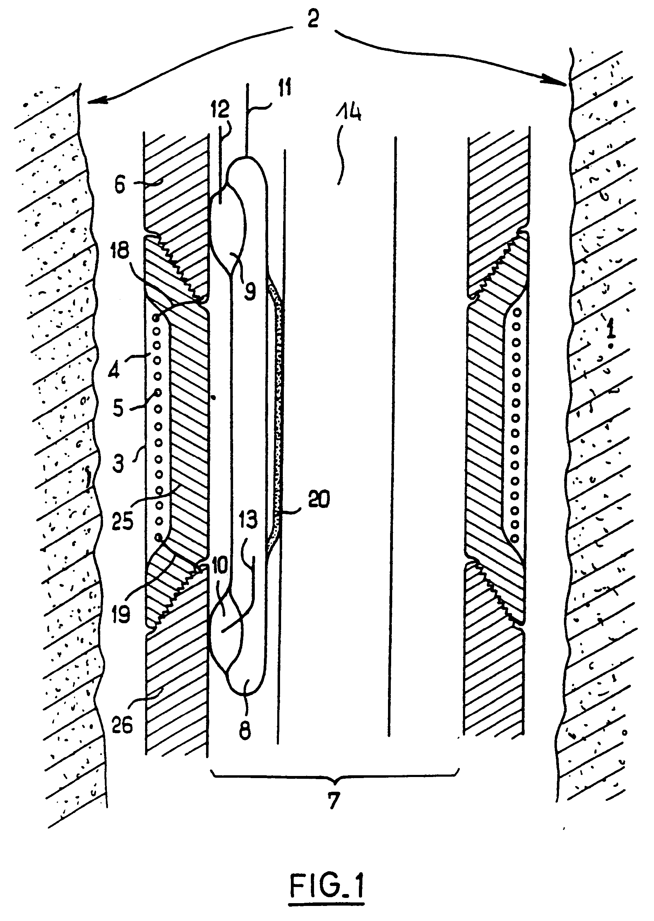

En se référant à la figure 1, l'élément de cuvelage 3 selon l'invention constituant une source électromagnétique pour l'étude des propriétés électromagnétiques des formations géologiques 1 et des fluides au voisinage du puits figuré par ses parois 2, cuvelé à l'aide d'un cuvelage 7, comporte une bobine de fil conducteur 5 noyée dans une gaine isolante 4.

Le diamètre du fil de la bobine, sa longueur, sont définis en fonction des caractéristiques du champ souhaité.

L'élément de cuvelage 3, à bobine 5 intégrée, est monté de manière usuelle par vissage aux éléments 26, 6 de cuvelage inférieur et supérieur, conducteurs.

Le montage est tel que le seul contact électrique entre les éléments 26, 6 et 3 s'effectue par l'intermédiaire des extrémités 18 et 19 de la bobine 5 de sorte que si l'élément 6 supérieur, conducteur, est relié au pôle positif d'une alimentation de courant et que l'élément 26 inférieur est relié au pôle négatif de cette même alimentation il y ait passage du courant au niveau de l'élément 3 dans la bobine seulement. Si les éléments inférieur et supérieur ne sont pas reliés à une alimentation de courant, aucun courant primaire ne circule dans la bobine qui est alors passive. L'activation de la bobine peut s'effectuer à l'aide d'un patin 8, suspendu à l'extrémité d'un câble 11 relié à un treuil en surface, que l'on descend, par actionnement du treuil, à l'intérieur du puits contenant le cuvelage selon l'invention, par exemple si le puits est tubé, dans l'espace annulaire compris entre le cuvelage 7 et un tubage 14. Le patin 8 comprend deux ergots conducteurs 9 et 10 en guise d'électrodes, séparés par un matériau isolant et distants d'une longueur légèrement supérieure à la longueur de l'élément central 3 de sorte qu'il existe au moins une position du patin telle que l'ergot supérieur 9 est en contact avec l'élément 6 du cuvelage supérieur et l'ergot inférieur 10 est en contact avec l'élément 26 de cuvelage inférieur. L'ergot 9 est relié par un câble conducteur 12 au pôle positif d'une alimentation de courant alors que l'ergot 10 est relié par un câble conducteur 13 au pôle négatif de cette même alimentation. Ainsi il est possible d'établir un circuit électrique fermé entre l'alimentation et la bobine en passant par les ergots et les éléments de cuvelage inférieur et supérieur.

Le patin est équipé d'une lame de ressort en arc 20 disposé symétriquement aux ergots de façon que la lame soit en appui sur le corps du tubage 14 tandis que les ergots sont en contact avec le cuvelage. Le patin par son poids descend dans le puits et est remonté par traction sur un câble 11 reliant le patin à un treuil situé en surface.

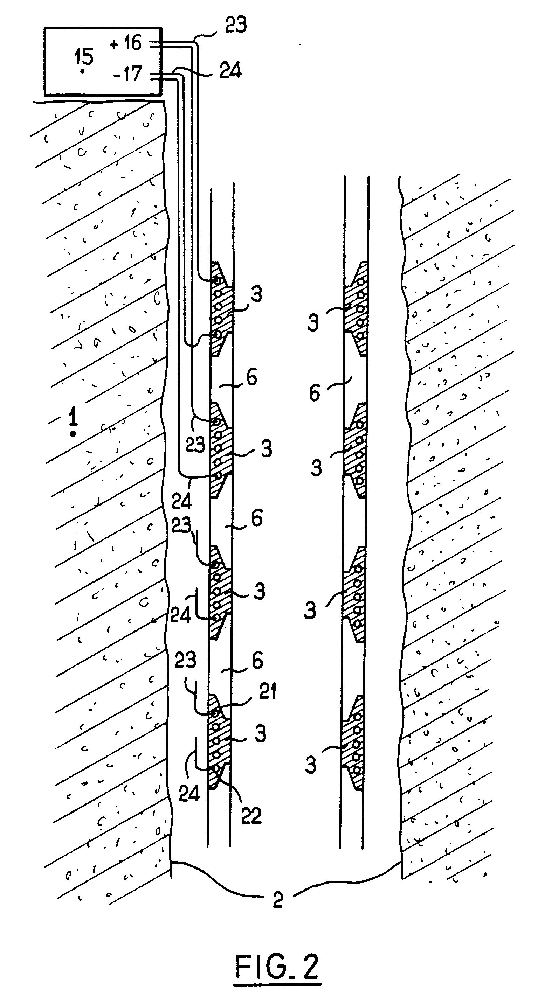

Un autre mode simple d'activation, représenté sur la figure 2, de la source électromagnétique selon l'invention, consiste à relier à l'aide de câbles conducteurs 23, 24 situés par exemple à demeure entre la paroi du puits 2 et la paroi extérieure du cuvelage, chacune des extrémités 21, 22 de la bobine respectivement aux pôles positif et négatif d'une alimentation de courant 15 placée en surface, et non plus aux éléments de cuvelage inférieur et supérieur.

Il a l'avantage, par rapport au mode d'activation par patin, qu'il nécessite une installation en surface plus légère puisqu'il n'y a pas besoin dans ce cas de système de treuillage.

L'alimentation en surface peut être constituée par un synthétiseur de signaux associé à un amplificateur pour générer la puissance.

Les dimensions de la bobine, la longueur, compte tenu du diamètre du fil et du matériau conducteur utilisé, sont calculées en fonction des caractéristiques électromagnétiques de la source souhaitées, en particulier les moments, à partir de relations bien connues des électromagnéticiens, permettant en particulier de calculer la résistance R_{B} de la bobine. Si la résistance R_{B} est très inférieure (par exemple s'il existe un rapport de l'ordre de 1000) à la résistance R_{F} du milieu entourant la bobine, la bobine traversée par un courant agit comme un dipôle magnétique. Si au contraire, la résistance de la bobine et de l'ordre de la résistance du milieu environnant, la bobine traversée par un courant agit à la fois comme un dipôle électrique et un dipôle magnétique : on est donc en présence alors d'une source à double polarisation.

L'élément central de cuvelage dans lequel est noyée la bobine peut être réalisé entièrement dans le même matériau. Dans ce cas, celui-ci doit être résistant et isolant, comme, par exemple, la fibre de verre. Cet élément central peut être également bicomposite, constitué d'un noyau central 25 représenté sur la figure 1, résistant et conducteur, en acier par exemple, entouré d'un manchon 4 en matériau isolant dans lequel est noyée la bobine. Cette dernière forme de réalisation présente un avantage dans la mesure où la partie du cuvelage en acier, interne à la bobine, fait l'effet d'un noyau, ce qui entraîne une amplification du moment d'émission de la source.

De ce fait, pour un élément central bicomposite, la puissance de courant nécessaire pour l'obtention d'un moment d'émission prédéterminé sera très inférieure (dans un rapport de 1 à 100 par exemple) à la puissance nécessaire à l'obtention de ce même moment pour un élément central ne comportant pas de noyau.

Il peut être intéressant de disposer d'une source électromagnétique multiple. Sur la figure 2 sont schématisés quatre éléments de cuvelage selon l'invention formant chacun une source électromagnétique, lesdits éléments étant intégrés au cuvelage et ayant leurs bobines reliées chacune par autant de paires de câbles conducteurs (23, 24) placées à l'extérieur du cuvelage à une alimentation de courant 15 située en surface. Les sources peuvent être activées simultanément ou successivement. Les mesures s'effectuent classiquement en des points donnés à l'aide de bobines de réception descendues dans le puits à l'aide de câble et reliées par exemple à un amplificateur récepteur et un enregistreur situé en surface. Les mesures peuvent également être effectuées en surface ou dans un puits différent et voisin du puits dans lequel se trouvent la ou les sources électromagnétiques selon l'invention.

## Revendications

1. Elément de cuvelage (3) constituant une source électromagnétique de puits pour l'étude des propriétés électromagnétiques des formations géologiques ou des fluides au voisinage d'un puits cuvelé caractérisé en ce que cet élément comporte une bobine conductrice solénoïdale (5) intégrée s'inscrivant dans un cylindre dont le diamètre est inférieur au diamètre extérieur du cuvelage et supérieur au diamètre intérieur du cuvelage reliée à des moyens d'activation permettant le passage d'un courant électrique dans la bobine, ladite bobine est noyée dans une gangue isolante (4).

2. Elément de cuvelage selon la revendication 1 caractérisé d'une part en ce que chacune des extrémités (18, 19) de la bobine est en contact électrique avec, l'une, l'élément de cuvelage (6) directement supérieur à l'élément de cuvelage (3) auquel la bobine (5) est intégrée, et l'autre (19), l'élément de cuvelage (26) directement inférieur, ces deux éléments de cuvelage supérieur et inférieur étant conducteurs, et d'autre part en ce que les moyens d'activation sont constitués d'un patin (8) pouvant être descendu dans le puits permettant de relier les éléments conducteurs supérieur (6) et inférieur (26) du cuvelage à une alimentation de courant.

3. Elément de cuvelage selon la revendication 2 caractérisé en ce que le patin comporte au moins deux ergots conducteurs (9, 10) espacés d'une distance égale à la distance existant entre les éléments conducteurs inférieur (26) et supérieur (6) du cuvelage reliés chacun à un des pôles d'une alimentation de courant.

4. Elément de cuvelage selon la revendication 3 caractérisé en ce que le patin (8) comporte des moyens de blocage (20) permettant de mettre les ergots (9, 10) en contact avec les éléments conducteurs supérieur (6) et inférieur (26) du cuvelage.

5. Elément de cuvelage selon la revendication 1 caractérisé en ce que les moyens d'activation sont constitués d'une paire de fils conducteurs (23, 24) reliant chacune des extrémités de la bobine, l'une au pôle positif (16) d'une alimentation (15), l'autre au pôle négatif (17) de cette même alimentation.

6. Elément de cuvelage selon la revendication 1 caractérisé en ce que ledit élément est constitué en partie d'un élément tubulaire central métallique (25) interne à la bobine (5), qui fait office de noyau pour la bobine.

7. Cuvelage pour puits de forage caractérisé en ce qu'il est constitué de la succession d'éléments ordinaires de cuvelage et d'au moins un élément de cuvelage selon l'une des revendications 1 à 6, constituant une source electromagnétique de puits.

## Claims

1. A well casing element (3) constituting an electromagnetic source for examining the electromagnetic properties of geological formations or fluids in the vicinity of a cased well, characterised in that the said element comprises an integrated conductive solenoid coil (5) fitted into a cylinder the diameter of which is less than the outside diameter of the casing and greater than the inside diameter of the casing, connected to activating means to allow an electric current to pass through the coil, the said coil being embedded in an insulating material (4).

2. A casing element according to Claim 1, characterised on the one hand in that each of the ends (18, 19) of the coil is in electrical contact with, in the case of the end (18), the casing element (6) directly above the casing element (3) into which the coil (5) is integrated and the other (19) the casing element (26) directly below it, these two upper and lower casing elements being conductive, and on the other hand in that the activating means are constituted by a shoe (8) adapted to be lowered into the well and making it possible to connect the upper (6) and lower (26) conductive elements of the casing to a current supply.

3. A casing element according to Claim 2, characterised in that the shoe comprises at least two conductive studs (9, 10) spaced apart by a distance equal to the distance between the lower (26) and upper (6) conductive elements of the casing each connected to one of the poles of a current supply.

4. A casing element according to Claim 3, characterised in that the shoe (8) comprises locking means (20) which make it possible to bring the studs (9, 10) into contact with the upper (6) and lower (26) conductive elements of the casing.

5. A casing element according to Claim 1, characterised in that the activating means consist of a pair of conductor wires (23, 24) connecting each of the ends of the coil, one to the positive pole (16) of a supply (15) and the other to the negative pole (17) of the same supply.

6. A casing element according to Claim 1, characterised in that the said element consists partly of a central metallic tubular element (25) inside the coil (5) which acts as a core for the coil.

7. A bore hole or well casing characterised in that it consists of a succession of ordinary casing elements and at least one casing element according to one of Claims 1 to 6, constituting an electromagnetic source for the well.

## Patentansprüche

1. Verkleidungselement, das eine elektromagnetische Quelle für Schächte bildet, zur Untersuchung der elektromagnetischen Eigenschaften geologischer Formationen oder von Fluiden in der Nähe eines verkleideten Schachts, gekennzeichnet durch eine integrierte Solenoid-Leiterspule (5), die in einen Zylinder hineinpaßt, dessen Durchmesser kleiner als der Außendurchmesser der Verkleidung und größer als der Innendurchmesser der Verkleidung ist und die mit Aktivierungseinrichtungen verbunden ist, die den Durchgang eines elektrischen Stromes durch die Spule ermöglichen, wobei die Spule in einem isolierenden Material (4) eingebettet ist.

2. Verkleidungselement nach Anspruch 1, dadurch gekennzeichnet, daß eines der Enden (18, 19) der Spule mit dem Verkleidungselement (6), das direkt über dem Verkleidungselement (3) liegt, in das die Spule (5) integriert ist, und das andere (19) mit dem direkt darunterliegenden Verkleidungselement (26) in elektrischem Kontakt steht, wobei diese zwei oberen und unteren Verkleidungselemente Leiter sind, und daß die Aktivierungseinrichtungen von einem Gleitschuh (8) gebildet werden, der in den Schacht abgesenkt werden kann, wodurch das obere (6) und das untere (26) Leiterelement der Verkleidung mit einer Stromquelle verbunden werden können.

3. Verkleidungselement nach Anspruch 2, dadurch gekennzeichnet, daß der Gleitschuh wenigstens zwei leitende Vorsprünge (9, 10) aufweist, deren Abstand gleich dem Abstand zwischen dem unteren (26) und dem oberen (6) Leiterelement der Verkleidung ist und die je mit einem der Pole einer Stromquelle verbunden sind.

4. Verkleidungselement nach Anspruch 3, dadurch gekennzeichnet, daß der Gleitschuh (8) Sperreinrichtungen (20) aufweist, durch die die Vorsprünge (9, 10) in Kontakt mit dem oberen (6) und dem unteren (26) Leiterelement der Verkleidung gebracht werden können.

5. Verkleidungselement nach Anspruch 1, dadurch gekennzeichnet, daß die Aktivierungseinrichtungen von einem Paar von Leiterdrähten (23, 24) gebildet werden, die eines der Enden der Spule mit dem positiven Pol (16) einer Stromquelle (15) und das andere mit dem negativen Pol (17) dieser Stromquelle verbinden.

6. Verkleidungselement nach Anspruch 1, dadurch gekennzeichnet, daß das Element teilweise von einem im Inneren der Spule (5) angeordneten, metallischen, zentralen, rohrförmigen Element (25) gebildet wird, das als Kern für die Spule dient.

7. Verkleidung für Bohrschächte, dadurch gekennzeichnet, daß sie aus nacheinander angeordneten, gewöhnlichen Verkleidungselementen und wenigstens einem, eine elektromagnetische Quelle für Schächte bildenden Verkleidungselement nach einem der Ansprüche 1 bis 6 besteht.
